# EUROPÄISCHE PATENTSCHRIFT

(11) **EP 0 441 410 B1**
(45) Veröffentlichungstag und Bekanntmachung des Hinweises auf die Patenterteilung: **28.02.1996**
(21) Anmeldenummer: 91103249.8
(22) Anmeldetag: 16.12.1985
(51) Int. Cl.: A61C 17/14

(54) **Verfahren zur Trennung eines dentalen Feststoff-Flüssigkeitsgemisches**
Procedure to separate solid particles from liquid particles of a dental mixture
Procédé pour séparer les particules solides-liquides d'un mélange dentaire

(30) Priorität: 17.12.1984 AT 3986/84
(43) Veröffentlichungstag der Anmeldung: 14.08.1991
(62) Teilanmeldung aus: 86900003.4
(73) Patentinhaber: Trawöger, Werner, A-6020 Innsbruck (AT); PREGENZER, Bruno, A-6173 Oberperfuss (AT)
(72) Erfinder: Trawöger, Werner, A-6020 Innsbruck (AT); PREGENZER, Bruno, A-6173 Oberperfuss (AT)
(74) Vertreter: Torggler, Paul, Dr.

(56) Entgegenhaltungen:
- EP-A- 0 102 000
- FR-A- 2 103 990
- FR-A- 2 196 833
- FR-A- 2 463 748

## Beschreibung

Die Erfindung betrifft ein verfahren zur Trennung eines dentalen Feststoff-Flüssigkeitsgemisches, das dem Einlaß einer Zentrifuge zugeführt wird, wobei die Feststoffe aus dem Gemisch abzentrifugiert und nach jeder Zentrifugierphase gemeinsam mit Restflüssigkeit unter Einwirkung von Schwerkraft durch den Auslaß der Zentrifuge in einen tiefer angeordneten Auffangtopf entleert werden, in dem Feststoffe gesammelt werden, und aus dem sich oberhalb einer vorgegebenen Feststoffablagerungshöhe sammelnde Restflüssigkeit nach oben abgesaugt und wieder der Zentrifuge zugeführt wird, in der noch enthaltene Feststoffe neuerlich abzentrifugiert werden, und wobei gereinigte Flüssigkeit in einen Ablaufkanal ausgetragen wird.

Ein derartiges Verfahren, sowie eine Einrichtung zu dessen Durchführung sind der DE-A-30 30 614 zu entnehmen. Die Feststoffe fließen dort bei Stillstand der Zentrifuge unter Schwerkrafteinwirkung durch einen an der Unterseite der Zentrifuge angeordneten Auslaßstutzen aus und werden in einem Absetzbehälter aufgefangen, in den der Auslaßstutzen ragt. Da die Zentrifuge aufgrund der Zentrifugalkräfte auch als Pumpe wirkt, wird zu Beginn jeder weiteren Zentrifugierphase die sich oberhalb der sedimentierenden Feststoffe sammelnde Restflüssigkeit durch den Auslaßstutzen in die Zentrifuge zurückgesaugt, wodurch ein maximales Flüssigkeitsniveau nie überschritten wird. Die Sedimentation der Feststoffe wird dabei trotz im Absetzbehälter angeordneter Beruhigungsflügel bei jeder Rücksaugung der Restflüssigkeit durch den mitrotierenden Auslaßstutzen empfindlich gestört. Teile der abgeschiedenen Feststoffe werden wieder mitgerissen, die in der Zentrifuge wieder abzentrifugiert werden, neuerlich in den Absetzbehälter abfließen, und so zwischen der Zentrifuge und dem Absetzbehälter hin- und hertransportiert werden.

Die Erfindung hat es sich nun zur Aufgabe gestellt, die neuerlich zu zentrifugierende Restflüssigkeit so störungsfrei in die Zentrifuge zurückzuführen, daß die von der Zentrifuge austretende Flüssigkeit sehr rein ist. Erfindungsgemäß wird dies dadurch erreicht, daß die Restflüssigkeit mit noch enthaltenen Feststoffen zum Einlaß der Zentrifuge über eine vom Auslaß verschiedene Leitung zurückgeführt wird, wobei sie zuerst aus dem Auffangtopf in einen Nebenbehälter übergeleitet und dann aus dem Nebenbehälter in den Einlaß der Zentrifuge gepumpt wird.

Beim erfindungsgemäßen Verfahren erfolgt somit keine direkte Rücksaugung der feststoffbeladenen Restflüssigkeit durch den Auslaß der Zentrifuge. Es entfällt eine Durchwirbelung bei der Entnahme der Restflüssigkeit, da kein rotierender Teil in die Restflüssigkeit eintaucht.

Eine bevorzugte Ausführung sieht dabei vor, daß in der Zentrifuge ein unter Normaldruck zufließendes sowie ein in einem Unterdrucksystem zugeführtes und daraus mittels einer Hilfspumpe ausgetragenes Gemisch gemeinsam getrennt werden, wobei die Zentrifuge und der Auffangtopf außerhalb des Unterdrucksystems vorgesehen werden, und daß die noch Feststoffe enthaltende Restflüssigkeit aus dem Auffangtopf in das im Unterdrucksystem zugeführte Gemisch eingesaugt wird.

Dadurch kann ein Gemisch, das beispielsweise gemäß der DE-A-32 31 272 zum einen aus einer Speischale und zum anderen aus einem mit einer Luftsaugpumpe in Verbindung stehenden Saughandstück stammt, gemeinsam bzw. gleichzeitig getrennt werden, wobei für die Absaugung der im Auffangtopf noch Feststoffe enthaltenden Restflüssigkeit die Saugpumpe der Absauganlage verwendet wird.

Nachstehend wird nun das Verfahren an Hand der beiliegenden Zeichnungen näher beschrieben. Darin zeigen:

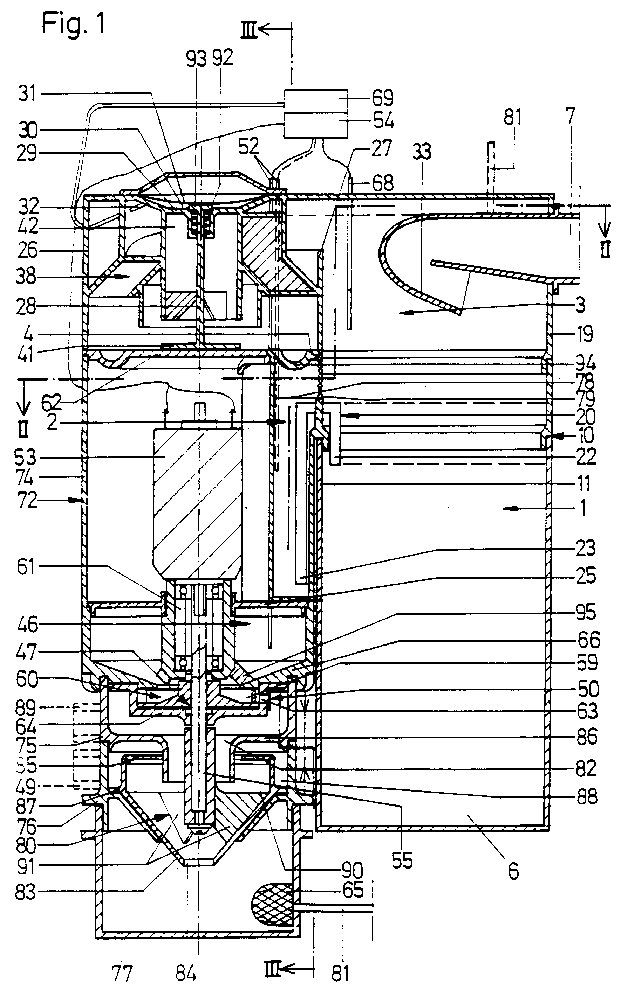

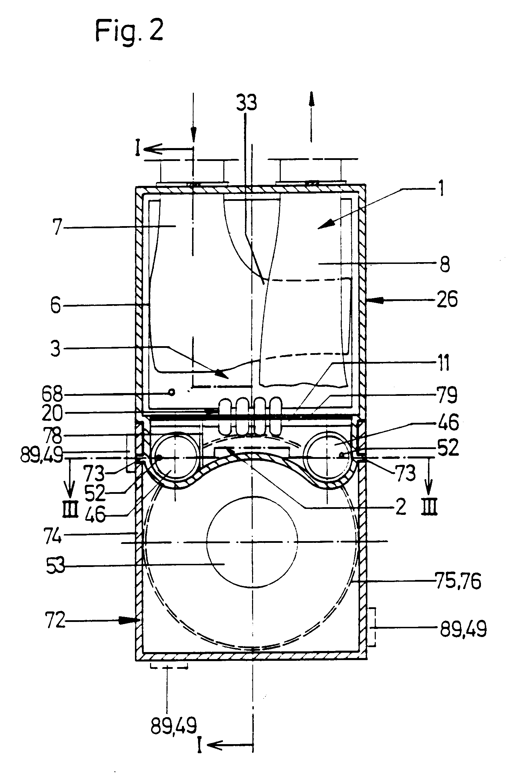

- Fig.1: einen Vertikalschnitt durch einen Abscheider nach der Linie I-I der Fig. 2 und
- Fig.2 und 3: Schnitte nach den Linien II-II und III-III der Fig. 1.

Der Zentrifuge 80 des Abscheiders wird das zu trennende Feststoff-Flüssigkeitsgemisch einerseits durch Schwerkraft aus einer Speischale oder dergleichen, andererseits durch die Absauganlage aus dem Mund des Patienten zugeführt. Ein Gehäuse 10, das durch eine Trennwand 11, die mit Abstand zur Gehäuseabdeckung 4 endet, ist in einen Absetzbehälter 1 und einen Nebenbehälter 2 unterteilt. Oberhalb beider verbleibt ein gemeinsamer Raum, der Teil eines Luftabscheideraumes 3 ist, der in einem Aufsatz 26 ausgebildet ist. Oberhalb des Absetzbehälters 1 ist ein Einlaß 7 für das von einem zahnärztlichen Saughandstück kommende Feststoff-Flüssigkeits-Saugluftgemisch vorgesehen, wobei diesem eine erste Umlenkfläche 33 zugeordnet ist, sodaß der Endteil des Einlasses etwa U-förmig ausgebildet ist. Die Umlenkfläche 33 erweitert sich vom Einlaß 7 aus in der Breite zur Außenwand 19 des Gehäuses 10 hin. Der Absetzbehälter 1 bildet einen abnehmbaren Sammeltopf 6, der von unten aufgeschoben und dichtend gehalten ist. Das durch den Einlaß 7 und die Umlenkfläche 33 strömende Gemisch trennt durch die Umlenkung, die Verwirbelung und den Aufprall an die Außenwand 19 Feststoffe und Flüssigkeit von der Saugluft ab, die sich im Absetzbehälter 1 sammeln. Dieser bildet gleichzeitig eine Beruhigungszone für die Ablagerung der Feststoffe am Boden des Sammeltopfes 6. Mit Erreichen einer bestimmten Füllhöhe der Flüssigkeit im Absetzbehälter 1 verdrängt weiter zufließendes Feststoff-Flüssigkeitsgemisch geklärte, jedoch noch Feststoffe enthaltende Flüssigkeit über eine oberhalb des maximalen Feststoffablagerungsniveaus angeordnete Übertrittseinrichtung in den Nebenbehälter 2, die beliebiger Art sein kann. Vorzugsweise ist ein diskontinuierlicher Flüssigkeitsübertritt durch den gezeigten Saugheber 20 vorgesehen, dessen längerer Schenkel 23 im Nebenbehälter 2 mündet. Die Eintrittsöffnung des kürzeren Schenkels 22 liegt dabei oberhalb der maximalen Ablagerungshöhe und unterhalb des Einsteckrandes des Sammeltopfes 6 und das Überlaufniveau des Saughebers 20 liegt tiefer als der obere Rand der Trennwand, von dem ein Gitter 79 zur Abdeckung 4 hochgezogen ist. Der Nebenbehälter 2 ist von einem weiteren Gehäuse 72 umgeben und mit einem Flüssigkeitsauslaß 9 versehen, dessen Austrittsöffnung 63 gegen den Eintritt von Falschluft durch ein Rückschlagventil 50 gesichert ist.

Die Entleerung des Nebenbehälters erfolgt mittels einer als Flügelradpumpe ausgebildeten Hilfspumpe 47 über ein hochstehendes Rohrstück 45 und den Flüssigkeitsauslaß 9, dessen Austrittsöffnung 63 mit geringem Abstand oberhalb des Bodens 64 seitlich in der Pumpenkammer 60 ausgebildet ist. In diese ist der Ansaugkanal 46 der Hilfspumpe 47 eingesetzt, der eine Bodenplatte 66 mit einer in die Pumpenkammer mündenden mittleren Öffnung aufweist. Das Gehäuse 72 besteht aus einem den Motor 53 der Hilfspumpe 47 aufnehmenden Oberteil 74, dessen Oberseite 62 mit der Abdeckung 4 fluchtet und den Zyklon 38 des Luftabscheideraumes 3 nach unten begrenzt, einem Mittelteil 75 und einem Unterteil 76. Die vertikal verlaufende Antriebswelle 55 ist in einem Lagerkörper 61 gelagert, der in einen den Motoraufnahmeraum vom Ansaugkanal 46 trennenden Boden 25 eingesetzt ist, durch einen erweiterten Abschnitt des Ansaugkanals 46 ragt und an der horizontalen Bodenplatte 66 über Stützstege 95 abgestützt ist. Vom erweiterten Teil des Ansaugkanals 46 führt eine Luftleitung 71 durch das durch den Boden 25 führende Rohrstück 45 zurück in den Luftabscheideraum 3, wobei diese durch eine Trennwand 78 vom Nebenbehälter 2 abgeteilt ist. Die Antriebswelle 65 trägt direkt unterhalb der Öffnung in der Bodenplatte 66 das gekrümmte Leitflächen aufweisende Flügelrad 59 der Hilfspumpe 47. Aufgrund des die Austrittsöffnung 63 gegen Falschlufteintritt sichernden Rückschlagventils 50 ist unterhalb des die Pumpenkammer 60 vom Mittelteil 75 trennenden Bodens 64 Normaldruck gegeben. Die Hilfspumpe 47 wird in Abhängigkeit vom Flüssigkeitsstand im Ansaugkanal 46 und im Nebenbehälter 2, der von Fühlern 52 abgetastet wird, über die Steuerung 54 geschaltet.

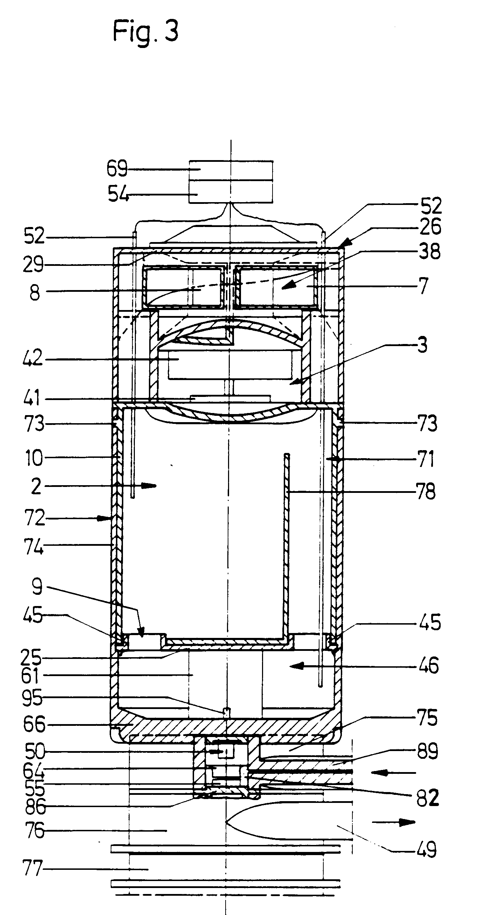

Der Mittelteil 75 des Pumpengehäuses 72 nimmt einen Zentrifugeneintrittsraum 82 auf, und ist zylindrisch ausgebildet, sodaß er in jede beliebige Stellung verdreht werden kann. Der Zentrifugeneintrittsraum 82 ist ebenfalls von der Antriebswelle 55 durchsetzt, auf der im Anschluß an das Flügelrad 59 über Stützstege 91 ein Zentrifugenbehälter 83 angeordnet ist.In den Zentrifugeneintrittsraum 82, der nach unten durch eine Leitfläche 86 begrenzt ist, die im peripheren Teil horizontal verläuft und in eine mit der Antriebswelle 55 koaxiale in den Zentrifugeninnenraum 90 ragende Hülse übergeht, mündet im wesentlichen tangential eine Ablaufleitung 89 (Fig. 3) der Speischale. Das im Zentrifugeneintrittsraum 82 sich aus der Ablaufleitung 89 und der Austrittsöffnung 63 vereinigende Gemisch fließt in die Zentrifuge 80, die im nachfolgenden Unterteil 76 des Pumpengehäuses ausgebildet ist. Der Zentrifugenbehälter 83 verjüngt sich nach unten zu einer Bodenöffnung 84, durch die abzentrifugierte Feststoffe in den auf den Unterteil 76 aufgesetzten Auffangtopf 77 gelangen, in dem sich aus der Zentrifuge 80 bei deren Stillstand gemeinsam mit Restflüssigkeit abfließende Feststoffe absetzen. Die Flüssigkeit steigt hingegen im Zentrifugenbehälter 83 nach oben und tritt über einen nach innen abstehenden Ringflansch 85 in einen äußeren Ringkanal 88 des Unterteiles 76, wobei der Ringkanal zum Auffangtopf 77 hin durch einen äußeren Ringflansch 87 des Zentrifugenbehälters 83 abgedeckt ist. Die gereinigte Flüssigkeit fließt dann über den Ablaufkanal 49 (Fig. 3) ab, der ebenso wie die Ablaufleitung 89 der Speischale in jede beliebige Stellung verdrehbar ist. Da der Auffangtopf 77 meist ein begrenztes Fassungsvermögen aufweist, das geringer als das des Sammeltopfes 6 des Absetzbehälters 1 ist, ist weiters der Auffangtopf 77 über eine Leitung 81 mit dem Gemischeinlaß 7 verbunden, wobei die Eintrittsöffnung durch ein Sieb 65 überdeckt ist. Der in der Zentrifuge 80 abgeschiedene überschüssige Feinschlamm wird somit in den Gemischeinlaß 7 zurückgesaugt, und verbleibt zu einem Teil im Absetzbehälter 1. Reste der Feststoffe werden mit der Restflüssigkeit in der bereits beschriebenen Weise wieder in den Zentrifugeneintrittsraum 82 mit Hilfe der Hilfspumpe 47 ausgetragen.

Das Abscheidegehäuse 10 ist vom Oberteil 74 des Gehäuses 72 in einfacher Weise trennbar, sobald der Aufsatz 26 abgenommen ist. Die beiden Rohrstücke 45 bilden auch Aufsteckteile für den Nebenbehälter 2, der an der Oberseite seitliche Stifte 73 trägt, die von oben in Schlitze der Seitenwände des Gehäuses 72 einsetzbar sind.

Die von den Feststoffen und der Flüssigkeit befreite Luft wird entlang eines in Verlängerung der Trennwand 11 in den Aufsatz 26 sich erstreckenden Wandabschnittes 27 nach oben, in einer Schraubenlinie eines Zyklons 38 um ein zentrales Absaugrohr 42 nach unten, sodann an dessen Ende durch das Absaugrohr 42 wieder nach oben und schließlich durch den Reinluftauslaß 8 zur Saugpumpe gesagt. Das Absaugrohr 42 ist durch einen Verschlußkörper 41 verschließbar, der an einem zentral durch das Absaugrohr 42 nach oben ragenden Stab 28 angeordnet ist, der die obere Abdeckung 29 des Aufsatzes 26 durchsetzt und dort einen Kopf 93 aufweist, wobei zwischen der Abdeckung 29 und dem Kopf 93 eine Druckfeder 92 angeordnet ist, sodaß der Verschlußkörper 41 in Schließrichtung beaufschlagt ist. Die obere Abdeckung 29 begrenzt eine Kammer 30, in der eine Membran 31 angeordnet ist, und über eine Leitung 32, die an den Reinluftauslaß 8 angeschlossen ist, unter Unterdruck steht. Dadurch beaufschlagt die Membran 31 den Kopf 93 und hält den Verschlußkörper 41 in Offenstellung. In die Leitung 32 ist ein Ventil 69 eingesetzt, das über eine Steuerung 54 betätigt wird, der ein Flüssigkeitsniveaufühler 68 zugeordnet ist. Steigt die Flüssigkeit im Gehäuse 10 in den Luftabscheideraum 3 an, so wird über den Niveaufühler 68 das Ventil 69 betätigt, das die Kammer 30 mit der Außenluft in Verbindung setzt, sodaß unter Wirkung der Feder 92 der Verschlußkörper 41 das Absaugrohr 42 verschließt. Vorteilhaft wird dabei gleichzeitig auch die Saugpumpe selbst abgeschaltet. Eine Auffangrinne 94 rund um den Zyklon 38 sammelt Restflüssigkeit und leitet diese ins Gehäuse 10 vorzugsweise in den darunter liegenden Nebenbehälter 2.

## Patentansprüche

1. Verfahren zur Trennung eines dentalen Feststoff-Flüssigkeitsgemisches, das dem Einlaß (82) einer Zentrifuge (80) zugeführt wird, wobei die Feststoffe aus dem Gemisch abzentrifugiert und nach jeder Zentrifugierphase gemeinsam mit Restflüssigkeit unter Einwirkung von Schwerkraft durch den Auslaß (84) der Zentrifuge (80) in einen tiefer angeordneten Auffangtopf (77) entleert werden, in dem Feststoffe gesammelt werden, und aus dem sich oberhalb einer vorgegebenen Feststoffablagerungshöhe sammelnde Restflüssigkeit nach oben abgesaugt und wieder der Zentrifuge (80) zugeführt wird, in der noch enthaltene Feststoffe neuerlich abzentrifugiert werden, und wobei gereinigte Flüssigkeit in einen Ablaufkanal (49) ausgetragen wird, dadurch gekennzeichnet, daß die Restflüssigkeit mit noch enthaltenen Feststoffen zum Einlaß (82) der Zentrifuge (80) über eine vom Auslaß (84) verschiedene Leitung (81) zurückgeführt wird, wobei sie zuerst aus dem Auffangtopf (77) in einen Nebenbehälter (2) übergeleitet und dann aus dem Nebenbehälter (2) in den Einlaß (82) der Zentrifuge (80) gepumpt wird.

2. Verfahren nach Anspruch 1, dadurch gekennzeichnet, daß in der Zentrifuge (80) ein unter Normaldruck zufließendes sowie ein in einem Unterdrucksystem zugeführtes und daraus mittels einer Hilfspumpe (47) ausgetragenes Gemisch gemeinsam getrennt werden, wobei die Zentrifuge (80) und der Auffangtopf (77) außerhalb des Unterdrucksystems vorgesehen werden, und daß die noch Feststoffe enthaltende Restflüssigkeit aus dem Auffangtopf (77) in das im Unterdrucksystem zugeführte Gemisch eingesaugt wird.

## Claims

1. A method of separating a dental solid-liquid mixture which is fed to the inlet (82) of a centrifuge (80), wherein the solids are centrifuged out of the mixture and emptied through the outlet (84) of the centrifuge (80) after each centrifuging phase jointly with residual liquid under the effect of the force of gravity into a lower receiving container (77) in which solids are collected and from which residual liquid which accumulates above a predetermined settling level of solids is sucked off upwardly and fed again to the centrifuge (80) in which solids still contained therein are again centrifuged, and wherein purified liquid is discharged into a drain duct (49), characterised in that the residual liquid, jointly with the solids still contained therein, is fed back to the inlet (82) of the centrifuge (80) by way of a conduit (81) different from the outlet (84), whereby it firstly is transferred from the receiving container (77) into a secondary container (2) and then pumped from the secondary container (2) into the inlet (82) of the centrifuge (80).

2. A method according to claim 1, characterised in that a mixture flowing to the centrifuge under normal pressure and a mixture which is supplied in a reduced pressure system and which is discharged therefrom by means of an auxiliary pump (47) are jointly separated in the centrifuge (80), wherein the centrifuge (80) and the receiving container (77) are provided outside the reduced pressure system, and that the residual liquid, jointly with the solids still contained therein, is sucked from the receiving container (77) into the mixture which is supplied by the reduced pressure system.

## Revendications

1. Procédé de séparation d'un mélange dentaire liquide-solide, qui est amené à l'entrée (82) d'une centrifuge (80), où les matières solides sont séparées du mélange par centrifugation et évacuées après chaque phase de centrifugation, conjointement avec du liquide résiduel sous l'effet de la force de gravité par la sortie (84) de la centrifugeuse (80) dans un récipient (77) disposé en aval, dans lequel les matières solides s'accumulent, et duquel le liquide résidual s'accumulant au-dessus d'un niveau prédeterminé de matières solides décantées est aspiré vers le haut et amené à nouveau à la centrifugeuse (80), dans laquelle des matières solides encore présentes sont une nouvelle fois centrifugées, et où du liquide purifié est déchargé dans un canal de sortie (49), caractérisé par le fait que le liquide résiduel, conjointement avec les matiéres solides encore présentes est ramené à l'entrée (82) de la centrifugeuse (80) par l'intermédiaire d'une conduite (81) distincte de la sortie (84), où il est transféré d'abord du récipient (77) dans un réservoir secondaire (2) et pompé ensuite du réservoir secondaire (2) à l'entrée (82) de la centrifugeuse (80).

2. Procédé selon la revendication 1, caractérisé par le fait que dans la centrifugeuse (80), un mélange arrivant sous pression normale ainsi qu'un mélange amenè dans un système de vide et déchargé de celui-ci à l'aide d'une pompe auxiliaire (47) sont séparés de façon conjointe, où la centrifugeuse (80) et le récipient (77) sont prevus à l'extérieur du système de vide, et que le liquide résiduel conjointement avec les matières solides encore présentes est aspiré du recipient (77) dans le mélange amené dans le système de vide.
